# EUROPEAN PATENT APPLICATION

(11) **EP 4 517 115 A1**
(43) Date of publication of application: **05.03.2025**
(21) Application number: 24197581.2
(22) Date of filing: 30.08.2024
(51) Int. Cl.: F16B 21/02, F16B 21/09, A45F 5/00

(54) **A CONNECTOR STUD**

(30) Priority: 30.08.2023 GB 202313142
(71) Applicant: Peter Jones (ILG) Limited, Abergavenny, Monmouthshire NP7 5YG (GB)
(72) Inventor: MORGAN, Christopher, Abergavenny, Monmouthshire NP7 5LU (GB); FALL, Christopher, Abergavenny, Monmouthshire NP7 5LU (GB); VANN, Thomas, Abergavenny, Monmouthshire NP7 5LU (GB); WOOD, Daniel, Abergavenny, Monmouthshire NP7 5LU (GB)
(74) Representative: Haseltine Lake Kempner LLP

(57) **Abstract**

According to the present disclosure, there is provided a connector stud comprising: a head component comprising a head portion and a neck portion extending from a first side of the head portion, the head portion having a regular polygonal shape; wherein the head component comprises an attachment slot defined in a second side of the head portion, the second side being opposed to the first side, wherein the attachment slot extends radially into the head portion, the attachment slot being configured to receive a protrusion of a connector dock; wherein the head component further comprises a detent arrangement configured to inhibit movement of a protrusion of a connector dock along the attachment slot.

## Description

### Field of Invention

The present disclosure relates to a connector stud, and an electronic device and a connector system which each comprise the connector stud.

### Background

Connector systems are known for detachably connecting devices and/or equipment, such as radios and other mobile communications devices, to a user's clothing or another item.

Such connector systems typically comprise a male connector stud which is attached to or incorporated into the equipment. A separate female dock may be located on the item to which the equipment is to be attached and the connector stud engages with the dock to affix the equipment in the required position.

Such connector systems may be used by personnel in a variety of sectors to connect and carry said devices and/or equipment. In many cases, the proper retention of the equipment is safety critical and thus the connector system must be sufficiently robust to avoid the equipment being inadvertently released from the connector dock.

The invention seeks to provide an improved connector stud.

### Summary

According to a first aspect, there is provided a connector stud comprising: a head component comprising a head portion and a neck portion extending from a first side of the head portion, the head portion having a regular polygonal shape; wherein the head component comprises an attachment slot defined in a second side of the head portion, the second side being opposed to the first side, wherein the attachment slot extends radially into the head portion, the attachment slot being configured to receive a protrusion of a connector dock; wherein the head portion further comprises a detent arrangement configured to inhibit movement of a protrusion of a connector dock along the attachment slot.

The attachment slot may comprise a first portion and a second portion. The detent arrangement may comprise a first detent configured to inhibit movement of the protrusion of the connector dock from the first portion to the second portion.

The first detent may comprise a constriction located between the first portion and the second portion, the constriction defining a region of reduced width compared to a width of the first portion and a width of the second portion.

The first detent may comprise a rib defined between the first portion and the second portion.

The first portion may be concentric with an axis of symmetry of the head portion and the second portion may be spaced radially outward from the first portion.

The detent arrangement may comprise a second detent configured to inhibit movement of the protrusion of the connector dock out of the attachment slot.

The second detent may comprise a boundary wall extending along a perimeter of the head portion.

The attachment slot may further comprise an inclined surface offset laterally from the boundary wall and configured such that rotation of the head component relative to the protrusion of the connector dock raises the protrusion out of the attachment slot to allow the connector stud to be removed from the connector dock.

The attachment slot may extend radially from an axis of symmetry of the head portion to a perimeter of the head portion.

The connector stud may further comprise a base component comprising a base plate and a spacer which projects away from the base plate. At least one of the spacer and the neck portion may comprise a base attachment interface configured to attach the head component to the base component.

The base attachment interface may be comprised by one of the spacer and the neck portion comprising a recess and the other of the spacer and the neck portion comprising a complementary protrusion which is received by the recess. The recess and the protrusion may be configured to prevent rotation of the head component relative to the base component. The base component may comprise a threaded insert which sits at least partially within a thickness of the spacer for receiving a screw which passes through the neck portion of the head component to fasten the head component to the base component.

According to a second aspect, there is provided a device comprising a connector stud as described above.

The device may be an electronic device.

The electronic device may be a mobile communications device.

According to a third aspect, there is provided a connector system comprising a connector stud as described above and a connector dock configured to engage with the connector stud.

The connector dock may comprise a receiving portion for receiving the head portion of the connector stud. The receiving portion may comprise an indexing mechanism which preferentially biases the head portion into a plurality of discrete angular positions.

The indexing mechanism may be formed by a pair of biasing surfaces which lie parallel to opposing sides of the head portion and are spaced from one another by a distance which is greater than the width between opposing sides of the head portion, but which is less than the width between opposing corners of the head portion.

The connector dock may further comprise a cantilevered tab with the protrusion provided at a distal end of the cantilevered tab.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief Description of the Drawings

Embodiments will now be described by way of example only, with reference to the Figures, in which:
Figure 1 is a perspective view of an example connector stud according to the present disclosure;
Figure 2 is an exploded view of the connector stud of Figure 1;
Figure 3 is a plan view of a base component of the connector stud;
Figure 4A is a perspective view of a head component of the connector stud;
Figure 4B is a plan view of the head component;
Figure 4C is a side view of the head component;
Figure 4D is a bottom view of the head component;
Figure 5 is a perspective view of a connector dock for use with the connector stud;
Figure 6 is a rear view of the connector dock;
Figure 7 is a rear view of an example connector system according to the present disclosure, shown in a locked configuration; and
Figure 8 is a rear view of the connector system, shown in an unlocked configuration.

### Detailed Description

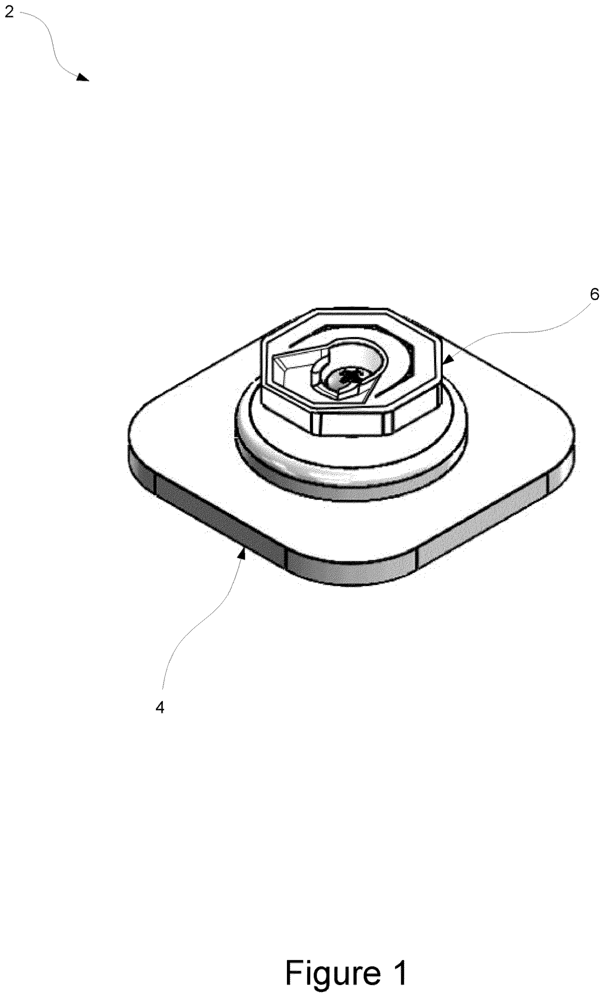

**Figure 1** shows an example connector stud 2 according to the present disclosure. The connector stud 2 is formed from a base component 4 and a head component 6. The base component 4 and the head component 6 are formed as discrete, separate elements which are detachably connected to one another using a fastener 8, such as a screw 8. However, in other examples, the base component 4 and the head component 6 may be integrally formed together.

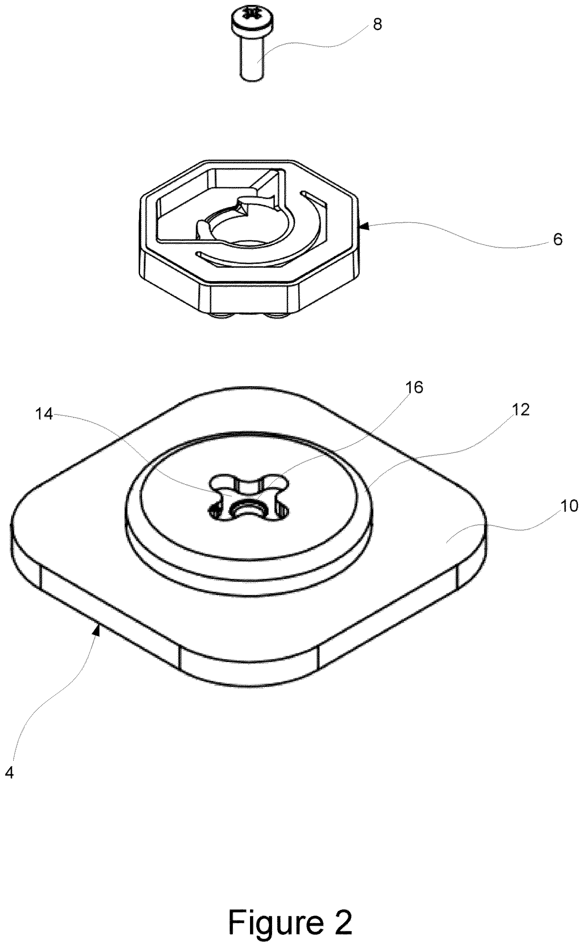

Referring now to **Figure 2****,** which shows an exploded view of the connector stud 2, the base component 4 comprises a base plate 10 and a spacer 12 which is a circular protrusion (although other shapes may be used) which projects upwards from the base plate 10.

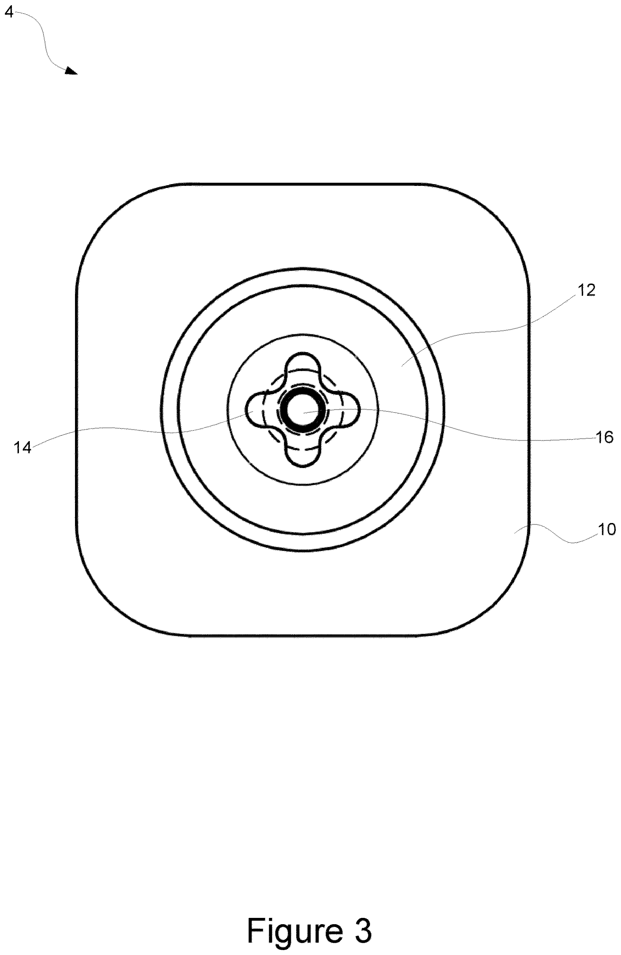

A non-circular recess 14 is formed at the centre of the spacer 12. In this example, the recess 14 has a cruciform profile formed by four lobes, as best seen in **Figure 3****.** A threaded insert 16 is located at the centre of the recess 14 within the body of the base plate 10. The threaded insert 16 sits at least partially within the thickness of the spacer 12.

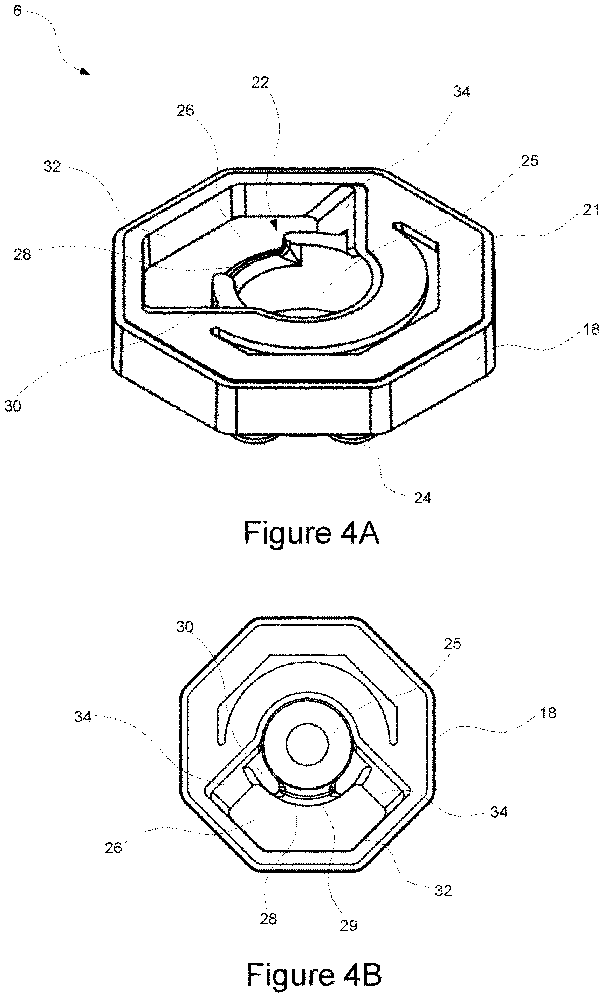

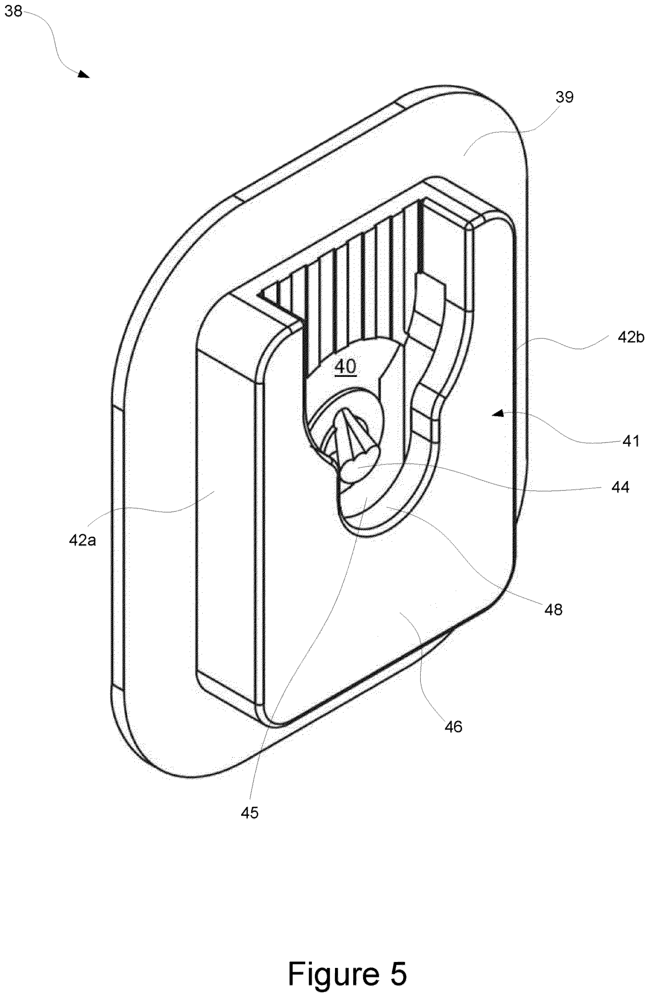

With reference to **Figure 4A** and **Figure 4B****,** the head component 6 comprises a head portion 18 and a neck portion 20 (see Figure 5) extending from a bottom side of the head portion 18. The head portion 18 has a regular polygonal shape such that it has rotational symmetry. In this example, the head portion 18 has eight sides and so is octagon-shaped; however, it will be appreciated that other regular polygon shapes may be used with fewer or greater sides.

An attachment slot 22 extends radially into the head portion 18. The attachment slot 22 is formed on a top side 21 of the head portion 18, the top side 21 being opposed to the bottom side of the head portion 18. The attachment slot 22 extends radially from the centre (its axis of symmetry) of the head portion 18 to a position radially offset from the centre of the head portion 18. In particular, the attachment slot 22 extends radially from the axis of symmetry of the head portion 18 to the perimeter of the head portion 18. The attachment slot 22 comprises a first portion 25 and a second portion 26. The first portion 25 and the second portion 26 define respective recessed surfaces into the top side 21 of the head portion. The first portion 25 is disposed at the centre of the head portion 18. The first portion 25 is concentric with the axis of symmetry of the head portion 18. The first portion 25 is substantially cylindrical, in that it forms a substantially cylindrical recess into the top side 21 of the head portion 18. The second portion 26 is disposed at a radially distal position from the centre of the head portion 18. The second portion 26 is spaced radially outward from the first portion 25. The second portion 26 is formed by a substantially U-shaped recess into the top side 21 of the head portion 18.

The second portion 26 is connected to the first portion 25, such that the second portion 26 is in series with the first portion 25. A cylindrical wall 30 is disposed between the first portion 25 and the second portion 26. The cylindrical wall 30 extends to a height which is below the level of the top side 21, but above the level of the respective recessed surfaces of the first portion 25 and the second portion 26.

A channel 28 extends through the cylindrical wall 30. The channel 28 defines a passage connecting the first portion 25 and the second portion 26.

The head component 18 comprises a rib 29 which extends laterally across the width of the channel 28. The rib 29 extends to a height which is below the height of the cylindrical wall 30 and the level of the top side 21, but above the level of the respective recessed surfaces of the first portion 25 and the second portion 26. The channel 28 is collinear with a centre of the first portion 25 and a centre of the second portion 26. The width of the channel 28 is narrower than a width or diameter of the first portion 25 and a width of the second portion 26. The width of the second portion 26 will be understood as the dimension of the second portion 26 which extends in the circumferential direction of the head portion 18.

Due to the relative dimensions of the channel 28 and the first and second portions 25, 26, the channel 28 defines a constriction (i.e., an area of narrower width) between the first portion 25 and the second portion 26.

The rib 29 and the constriction in the channel 28 form a first detent of a detect arrangement, as will be described further below. In other examples, only one of the rib 29 and the constriction in the channel 28 may be present and form the first detent.

In other examples, there may not be a cylindrical wall 30 disposed between the first portion 25 and the second portion 26. Instead, the channel 28 may extend between and connect the first portion 25 and the second portion 26. The channel 28 may define a region of reduced width compared to the width or diameter of the first portion 25 and the width of the second portion 26. This region of reduced width defines a constriction between the first portion 25 and the second portion 26. In further examples, the channel 28 may not comprise a rib 29. Instead, the channel 28 may comprise any other protrusion or a surface with raised height compared with the level of the respective recessed surfaces of the first portion 25 and the second portion 26 (or at least the level of the first portion 25, e.g., a step from the first portion 25 up to the second portion 26). In further examples still, the channel 28 may not comprise a rib 29 or any other protrusion or raised surface. Instead, the channel 28 may define a surface which is at the same level as the level of the respective recessed surfaces of the first portion 25 and the second portion 26.

The head portion 18 further comprises a boundary wall 32 which forms at least part of a boundary delimiting the second attachment portion 36. The boundary wall 32 extends along at least part of the perimeter of the head portion 18. However, in other examples, the boundary wall 32 may extend along a region of the head portion 18 which is radially inward of the perimeter of the head portion 18. The boundary wall 32 extends to the level of the top side 21. The boundary wall 32 acts as a second detent of the detent arrangement. The head portion 18 further comprises an inclined surface 34 disposed between the second portion 26 and the top side 21 of the head portion 18. In particular, an inclined surface 34 is disposed at each end of the U-shaped recess of the second portion 26. Each inclined surface 34 is offset laterally from the boundary wall 32. Each inclined surface 34 forms an angled surface connecting the recessed surface of the second portion 36 and the top side 21 of the head portion 18. In this example, the inclined surfaces 34 are shown as linearly inclined or angled surfaces (i.e., having a constant gradient), but in other examples, the inclined surfaces 34 may be curved.

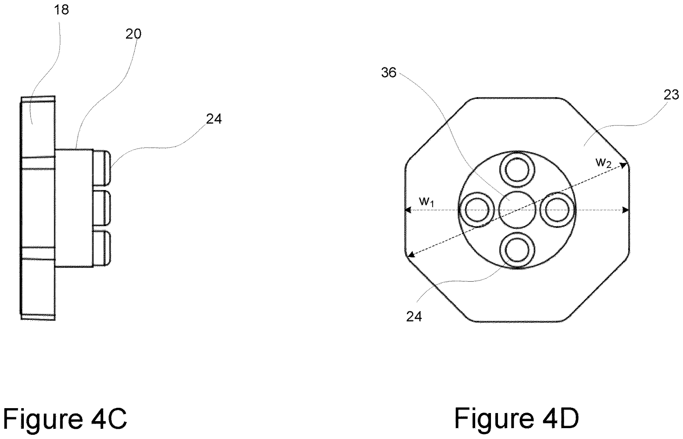

As shown in **Figures 4C and 4D****,** a protrusion 24 extends from (or is formed by) the neck portion 20. The protrusion 24 is complementary to the recess 14. In this example, the protrusion 24 is formed by four separate protruding portions which are configured (i.e., are sized and positioned) to engage with the four lobes of the recess 14; although in other examples the protruding portions may be contiguous. The protrusion 24 and the recess 14 form part of a base attachment interface configured to attach the head component 6 to the base component 4.

The protrusion 24 of the head component 6 is engaged in the recess 14 of the base component 4 to prevent relative rotation between the head component 6 and the base component 4. The screw 8 is then passed through a hole 36 formed through the centre of the head portion 18 and neck portion 20 and engages with the threaded insert 16 to maintain the engagement between the protrusion 24 and the recess 14. The hole 36 is counterbored (or countersunk) such that the head of the screw 8 sits below the level of the slot 22. To aid assembly of the base component 4 and the head component 6, it is desirable that the protrusion 24 positively engages with the recess 14 so as to prevent axial movement of the protrusion 24 out of the recess 14 under a relatively small axial force. In particular, the protrusion 24 may clip into the recess 14 via a formation, such as a rib or ridge, or via an interference fit. This holds the head component 6 in place while the screw 8 is screwed into the base component 4.

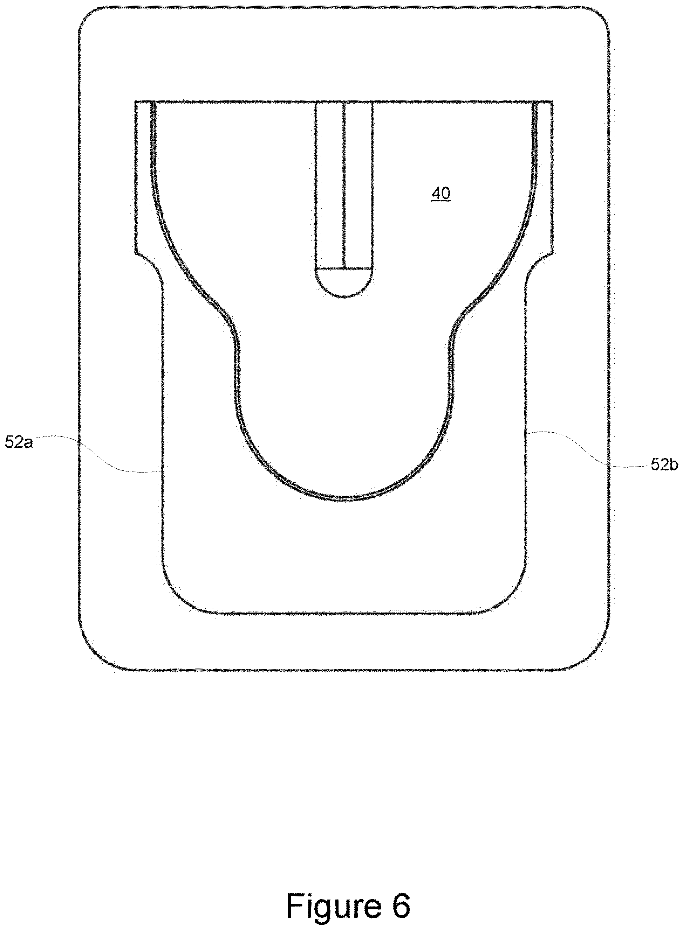

**Figure 5** shows a connector dock 38 for use with the connector stud 2 described previously. As shown, the connector dock 38 comprises a base plate 39 and a receiving portion 41 which projects upwards from the base plate 39. The receiving portion 41 comprises a pair of side walls 42a, 42b projecting upwards from the base plate 39 and a retaining wall 46 extending between the side walls 42a, 42b such that the retaining wall 46 runs parallel to, but is spaced from, the base plate 39. A keyhole slot 48 is formed in the retaining wall 46. The keyhole slot 48 extends into the retaining wall 46 between the side walls 42a, 42b. The keyhole slot 48 has a wider opening and then tapers to a narrower throat portion. As shown in **Figure 6****,** the side walls 42a, 42b of the receiving portion 41 define a pair of biasing surfaces 52a, 52b which face one another.

The base plate 39 comprises a cantilevered tab 40. A retaining barb or protrusion 44 projects upwards from the tab 40 towards the plane of the retaining wall 46. The tab 40 lies parallel to the keyhole slot 48 with the barb 44 provided at a distal end of the tab 40 such that it is aligned with the narrower throat portion of the keyhole slot 48. The barb 44 is inclined with respect to the plane of the base plate 39 such that it rises towards the distal end of the tab 40.

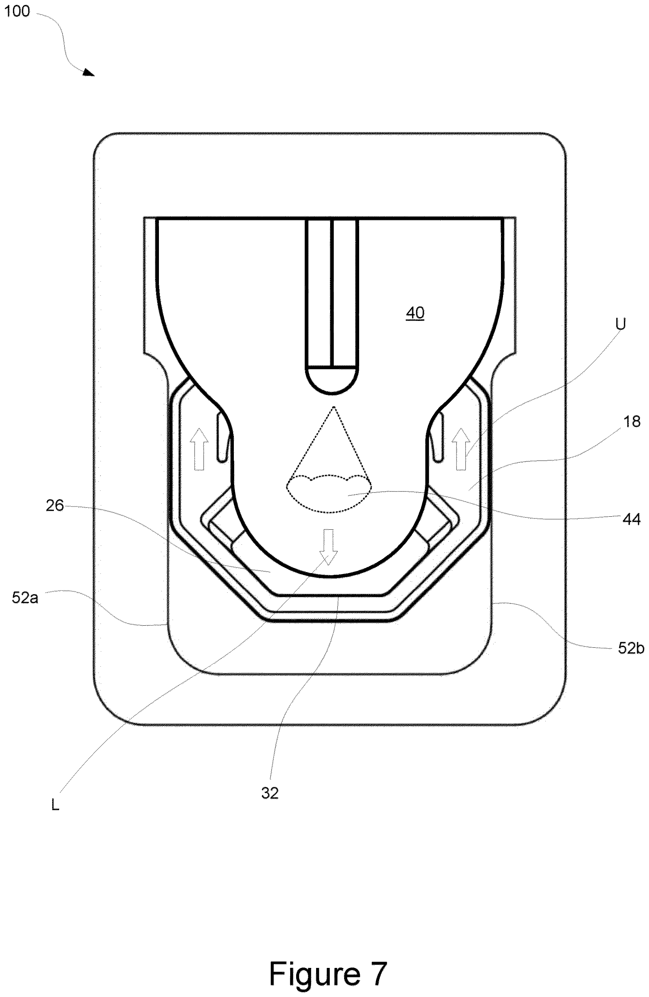

The connector stud 2 and the connector dock 38 together form a connector system 100. The base plate 39 and the receiving portion 41 together define a T-slot 45 for receiving the connector stud 2. Specifically, the connector stud 2 is slid into the connector dock 38 such that the head portion 18 of the connector stud 2 is received between the base plate 39 and the retaining wall 46, with the neck portion 20 received by the keyhole slot 48 and the barb 44 positioned at the centre of the head portion 18 (in alignment with the screw 8 and the hole 26) within the attachment slot 22. In this position, as shown in **Figure 7****,** the barb 44 is in alignment with and is received by the first portion 25 of the attachment slot 22. The head portion 18 can be inserted into the T-slot 45 in any orientation since the barb 44 is able to ride up and over the periphery of the head portion 18, thereby deflecting the cantilevered tab 40, before being received in the first portion 25 of the attachment slot 22. For ease of understanding, the barb 44 is shown in dashed lines to indicate its position, even though it is not visible in the orientation shown in Figure 7.

As shown in Figure 7, the head portion 18 is received between the biasing surfaces 52a, 52b. The biasing surfaces 52a, 52b run parallel to one another and are spaced apart by a distance which corresponds to the width w₁ (as shown in Figure 4D) between opposing sides of the head portion 18. Specifically, the spacing between the biasing surfaces 52a, 52b is greater than the width w₁ between opposing sides of the head portion 18, but less than the width w₂ between opposing corners (vertices) of the head portion 18 (i.e., the diameter of the circumcircle encircling the head portion 18). Accordingly, rotation of the head portion 18 about its axis of symmetry (which is coincident with the position of the barb 44) is only possible by the deflection (i.e., deformation) of the biasing surfaces 52a, 52b or deformation of the head portion 18 itself. Such deformation must result in the spacing between the biasing surfaces 52a, 52b being greater than the diameter of the head portion 18 in order to allow rotation. It will be appreciated that after clearing opposing corners of the head portion 18, the biasing surfaces 52a, 52b are allowed to return to their original rest position. The biasing surfaces 52a, 52b therefore form an indexing mechanism which preferentially biases the head portion 18 into a plurality of discrete angular positions in which opposing sides of the head portion 18 lie parallel with the biasing surfaces 52a, 52b. In this case, since the head portion 18 has eight sides, the connector stud 2 has seven preferred angular positions (at 45-degree intervals) with respect to the connector dock 38.

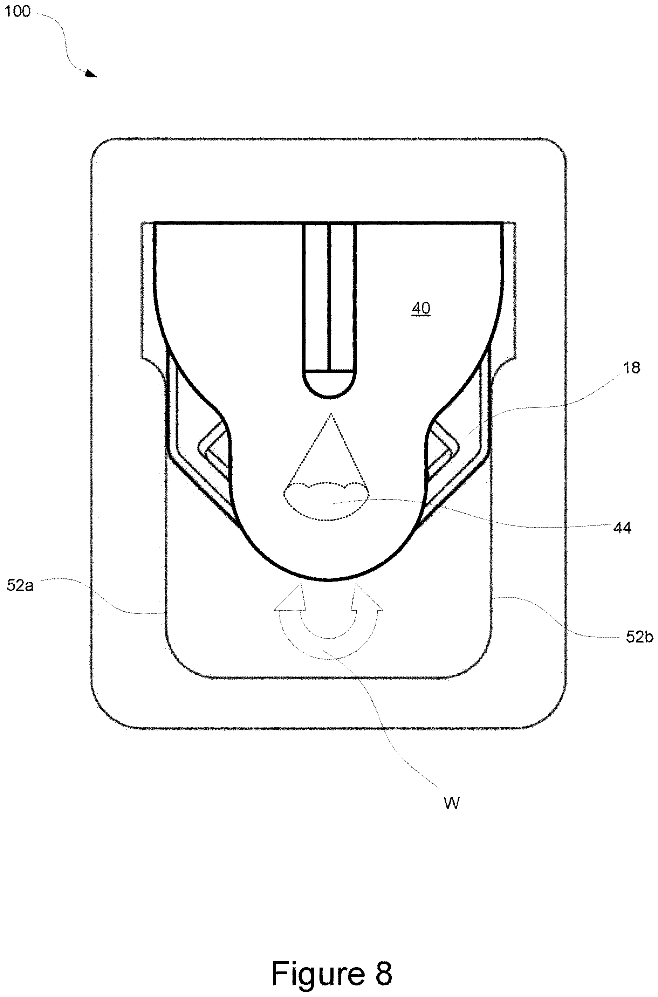

The connector system 100 is operable between a locked configuration in which the connector stud 2 cannot be withdrawn from the connector dock 38, and an unlocked configuration in which the connector stud 2 is removable from the connector dock 38. As described previously, the head portion 18 can be inserted into the T-slot 45 in any orientation since the barb 44 is able to ride up and over the periphery of the head portion 18. However, when the barb 44 is engaged in the first portion 25 of the attachment slot 22 of the head portion 18, the connector stud 2 cannot be removed from the connector dock 38. In this position, the connector system 100 is in the locked configuration. To transition the connector system 100 to the unlocked configuration, the attachment slot 22 must first be aligned with an unlocking direction U. Once the attachment slot 22 is aligned with the unlocking direction U, which is the position shown in Figure 7, the connector stud 2 can be moved linearly upwards relative to the connector dock 38 along the unlocking direction, so that the connector system 100 transitions to its unlocked configuration. The unlocked configuration of the connector system is shown in **Figure 8****.** To move the connector stud 2 from the locked configuration to the unlocked configuration, the barb 44 needs to be slidingly moved out from the first portion 25 and into engagement with the second portion 26. However, to do so, sufficient force must be applied to overcome the first detent, which in this example is defined by the channel 28 and the rib 29. The first detent is configured to inhibit movement of the barb 44 from the first portion 25 to the second portion 26 and/or between the first portion 25 and the second portion 26. This movement is inhibited by virtue of the constriction located between the first portion 25 and the second portion 26 and/or the rib 29 which the barb 44 needs to slide up and over. By providing the first detent, the connector stud 2 cannot be easily or accidentally moved from the locked configuration to the unlocked configuration. The connector stud 2 can be returned to the locked configuration from the unlocked configuration by reversing its motion in the unlocking direction, i.e., by moving the connector stud 2 downwards relative to the connector dock 38 in a locking direction L (opposed to the unlocking direction). This causes the barb 44 to be disengaged from the second portion 26 and re-engaged with the first portion 25.

In the unlocked configuration, the barb 44 is received in the second portion 26. In this position, the connector stud 2 cannot be removed from the connector dock 38 by translation movement of the connector stud 2 with respect to the connector dock 38 in any direction in the plane of the base plate 39. For example, the connector stud 2 cannot be moved further upwards relative to the connector dock 38, because the barb 44 abuts against the boundary wall 32 of the second attachment portion 26 which forms the second detent. The boundary wall 32 therefore inhibits movement of the barb 44 out of the attachment slot 22. The connector stud 2 cannot also be pulled away from the connector dock 38 in a direction substantially perpendicular to the base plate 39, as the head portion 18 is blocked between the retaining wall 36 and the tab 40. Instead, the connector stud 2 can only be removed from the connector dock 38 by moving the connector stud 2 in a withdrawal direction W relative to the connector dock 38, which in this case is rotational movement of the head portion 18 relative to the connector dock 38. This rotation, or twisting motion, causes the barb 44 to move within the second portion 26, until it reaches one of the inclined surfaces 34 at one of the ends of the second portion 26. Further rotation of the head portion 18 in the same direction causes the barb 44 to slide up and along the inclined surface 34 and out of the second portion 26, such that the barb 44 is raised out of the attachment slot 22. This enables the connector stud 2 to be removed from the connector dock 38. This two-step removal process of the connector stud 2 from the connector dock 38 means that the connector stud 2 cannot be inadvertently detached from the connector dock 38, providing improved security.

As described previously, the connector stud 2 utilises a two-piece construction comprising the base component 4 and the separate head component 6. This allows the head component 6 to be replaced if it breaks or becomes worn. Further, this allows the base component 4 and the head component 6 to be formed from dissimilar materials.

In particular, the head component 6 is formed from a self-lubricating material, such as Nylon 6. This allows the head component 6 of the connector stud 2 to rotate within the indexing mechanism formed by the connector dock 28, while minimising wear. The base component 4 may be connected to or integrally formed as part of the housing of a device or other equipment. The device may be an electronic device, such as a mobile communications device (e.g., a police radio). The base component 4 may therefore be formed from an impact resistant material, such as Acrylonitrile Butadiene Styrene (ABS).

As described previously, the non-circular recess 14 and corresponding protrusion 24 form an anti-rotation feature. Although non-circular, it is desirable for the recess 14 and protrusion 24 to have rotational symmetry in order to allow re-orientation of the head component 6 relative to the base component. In particular, in the example shown, where a cruciform recess 14 is used, the head component 6 can be reoriented through 90-degree intervals. This allows the axis of the unlocking/locking direction U, L relative to the device to be altered, if desired.

As described previously, the threaded insert 16 is received within the spacer 12 which also defines the recess 14 of the anti-rotation feature. Accordingly, the thickness of the connector stud 2 is minimised. The screw 8 which runs through the centre of the neck portion 20 also provides reinforcement to the neck portion 20.

In the example described above, the biasing surfaces 52a, 52b run parallel to one another to correspond to the opposing sides of the head portion 18. In other examples, the head portion 18 may have an odd number of sides such that opposing sides are not parallel. In this case, the biasing surfaces 52a, 52b may be angled relative to one another to correspond with the sides of the head portion 18.

Although it has been described that the head component 6 has the protrusion 24 and the base component 4 has the recess 14, it will be appreciated that this arrangement may be reversed. Further, each of the head component 6 and the base component 4 may be provided with a combination of recesses and protrusions. Although, the recess 14 has been described previously as being non-circular, it will be appreciated that the anti-rotation feature could be formed by a plurality of circular recesses which together form a non-circular recess. In particular, the cruciform recess 14 shown could be replaced by four circular recesses which receive the four separate protruding portions of the neck portion 20. In addition, although it has been described that the base attachment interface is formed by the recess 14 and the protrusion 24, it will be appreciated that in other examples, the base attachment interface may be formed from any cooperating elements on the base component 4 and the head component 6 which enable the base component 4 to be attached to the head component 6 in a fixed manner.

Although it has been described that the first portion 25 is formed by a cylindrical recess and that the second portion 26 is formed by a U-shaped recess, it will be appreciated that in other examples, the first portion 25 and the second portion 26 may be formed by any recess into the top side 21 of the head portion 18 which is sized and shaped such that it can receive the barb 44 of the connector dock 38.

Although it has been described that the first detent is formed by a constriction located between the first portion 25 and the second portion 26, it will be appreciated that in other examples, the first detent could be formed by any formation which is configured to inhibit the movement of the barb 44 between the first portion 25 and the second portion 26.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A connector stud comprising:
a head component comprising a head portion and a neck portion extending from a first side of the head portion, the head portion having a regular polygonal shape;
wherein the head component comprises an attachment slot defined in a second side of the head portion, the second side being opposed to the first side, wherein the attachment slot extends radially into the head portion, the attachment slot being configured to receive a protrusion of a connector dock;
wherein the head component further comprises a detent arrangement configured to inhibit movement of the protrusion of the connector dock along the attachment slot.

2. A connector stud as claimed in claim 1, wherein the attachment slot comprises a first portion and a second portion; and
wherein the detent arrangement comprises a first detent configured to inhibit movement of the protrusion of the connector dock from the first portion to the second portion.

3. A connector stud as claimed in claim 2, wherein the first detent comprises a constriction located between the first portion and the second portion, the constriction defining a region of reduced width compared to a width of the first portion and a width of the second portion.

4. A connector stud as claimed in claim 2 or 3, wherein the first detent comprises a rib defined between the first portion and the second portion.

5. A connector stud as claimed in any one of claims 2 to 4, wherein the first portion is concentric with an axis of symmetry of the head portion and the second portion is spaced radially outward from the first portion.

6. A connector stud as claimed in any preceding claim, wherein the detent arrangement comprises a second detent configured to inhibit movement of the protrusion of the connector dock out of the attachment slot.

7. A connector stud as claimed in claim 6, wherein the second detent comprises a boundary wall extending along a perimeter of the head portion.

8. A connector stud as claimed in claim 7, wherein the attachment slot comprises an inclined surface offset laterally from the boundary wall and configured such that rotation of the head component relative to the protrusion of the connector dock raises the protrusion out of the attachment slot to allow the connector stud to be removed from the connector dock.

9. A connector stud as claimed in any preceding claim, wherein the attachment slot extends radially from an axis of symmetry of the head portion to a perimeter of the head portion.

10. A connector stud as claimed in any one of the preceding claims, further comprising a base component comprising a base plate and a spacer which projects away from the base plate;
wherein at least one of the spacer and the neck portion comprises a base attachment interface configured to attach the head component to the base component; and, optionally:
wherein the base attachment interface is comprised by one of the spacer and the neck portion comprising a recess and the other of the spacer and the neck portion comprising a complementary protrusion which is received by the recess; wherein the recess and the protrusion are configured to prevent rotation of the head component relative to the base component; and
wherein the base component comprises a threaded insert which sits at least partially within a thickness of the spacer for receiving a screw which passes through the neck portion of the head component to fasten the head component to the base component.

11. A device comprising a connector stud as claimed in any preceding claim; and, optionally, wherein the device is an electronic device and more particularly a mobile communications device.

12. A connector system comprising a connector stud as claimed in any one of claims 1-10 and a connector dock configured to engage with the connector stud.

13. A connector system as claimed in claim 12, wherein the connector dock comprises a receiving portion for receiving the head portion of the connector stud;
wherein the receiving portion comprises an indexing mechanism which preferentially biases the head portion into a plurality of discrete angular positions.

14. A connector system as claimed in claim 13, wherein the indexing mechanism is formed by a pair of biasing surfaces which lie parallel to opposing sides of the head portion and are spaced from one another by a distance which is greater than the width between opposing sides of the head portion, but which is less than the width between opposing corners of the head portion.

15. A connector system as claimed in claim 13 or 14, wherein the connector dock comprises a cantilevered tab and the protrusion is provided at a distal end of the cantilevered tab.
